Europäisches Patentamt

European Patent Office

Office européen des brevets

(19)

(11) Numéro de publication : **0 098 774 B1**

(12) # FASCICULE DE BREVET EUROPÉEN

(45) Date de publication du fascicule du brevet :
**11.02.87**

(21) Numéro de dépôt : **83401330.2**

(22) Date de dépôt : **28.06.83**

(51) Int. Cl.⁴ : **G 21 C  5/06**, G 21 C  3/32

(54) Dispositif de fixation démontable d'un tube guide dans la pièce d'extrémité d'un assemblage combustible de réacteur nucléaire.

(30) Priorité : **01.07.82 FR 8211572**

(43) Date de publication de la demande :
**18.01.84 Bulletin 84/03**

(45) Mention de la délivrance du brevet :
**11.02.87 Bulletin 87/07**

(84) Etats contractants désignés :
**BE CH DE GB IT LI SE**

(56) Documents cités :
**EP-A- 0 041 014**
**FR-A- 1 511 234**
**FR-A- 1 536 527**
**FR-A- 1 585 236**
**FR-A- 2 049 108**
**FR-A- 2 368 785**
**FR-A- 2 473 773**
**FR-A- 2 493 024**
**GB-A- 2 054 081**
**US-A- 1 916 284**

(73) Titulaire : **COMMISSARIAT A L'ENERGIE ATOMIQUE Etablissement de Caractère Scientifique Technique et Industriel**
**31/33, rue de la Fédération**
**F-75015 Paris (FR)**

(72) Inventeur : **Feutrel, Claude**
**105, Grande Rue**
**F-91430 Vauhalian (FR)**

(74) Mandataire : **Mongrédien, André et al**
**c/o BREVATOME 25, rue de Ponthieu**
**F-75008 Paris (FR)**

EP 0 098 774 B1

**Description**

La présente invention se rapporte aux assemblages combustibles pour réacteurs nucléaires et plus particulièrement aux assemblages combustibles pour les réacteurs refroidis à l'eau ordinaire pressurisée.

De façon plus particulière encore, la présente invention a pour objet des perfectionnements aux tubes guides de tels assemblages combustibles dont on commencera par conséquent par rappeler la constitution générale connue.

On pourra se référer utilement, pour la description d'assemblages combustibles pour réacteurs à eau ordinaire d'un type connu, au brevet français FR-A-2 049 108 au nom de la Société Westinghouse Electric Corporation. Dans des éléments du genre de ceux décrits dans ce brevet, le combustible nucléaire du réacteur est réparti selon une pluralité de crayons combustibles logés dans le cœur du réacteur selon une répartition en assemblages juxtaposés de section générale carrée. Chaque assemblage combustible, s'étendant sur plusieurs mètres de long et possédant une structure mécanique rigide est maintenu entre les plaques de cœur supérieure et inférieure. Cette structure comporte deux pièces d'extrémité respectivement supérieure et inférieure munies d'orifices permettant le passage de l'eau de réfrigération qui circule verticalement de bas en haut, et un certain nombre de tubes guides assurant la cohésion de l'assemblage par leur fixation aux pièces d'extrémité supérieure et inférieure pour lesquelles ils jouent ainsi le rôle d'entretoises. Le long de chaque assemblage, un certain nombre de grilles de maintien, traversées par les tubes guides et délimitant des cellules de section carrée, permettent le passage et le maintien transversal des crayons de combustible eux-mêmes qui sont posés sur la pièce d'extrémité inférieure.

De façon également connue, les tubes guides ont en plus de leur fonction de cohésion mécanique de l'assemblage, une fonction de logement des crayons absorbants qui servent à tout instant au contrôle de la réaction en chaîne et que l'on insère le plus rapidement possible dans l'assemblage, au travers de la pièce d'extrémité supérieure ajourée à cet effet, lorsque l'on veut, pour une raison quelconque, provoquer un arrêt rapide du fonctionnement du réacteur.

De façon classique, les pièces d'extrémité des assemblages combustibles sont en acier inoxydable, c'est-à-dire en des matériaux absorbant assez fortement les neutrons, alors que les tubes guides sont en zircaloy de propriétés neutroniques beaucoup plus favorables. Cette différence de matériaux rend les problèmes de liaison tubes guides-plaques d'extrémité relativement délicats à résoudre.

Dans ces réalisations connues, la fixation du tube guide sur la pièce d'extrémité supérieure de l'assemblage se fait à l'aide d'un manchon intermédiaire en un matériau compatible avec celui de la pièce d'extrémité, car il n'est pas possible de souder directement le tube guide en zircaloy sur la pièce en acier. Ceci conduit par conséquent à utiliser un manchon d'acier emmanché sur la surface externe de la partie supérieure du tube guide et maintenu à l'aide d'un certain nombre de déformations mécaniques qui assurent la fixation du manchon sur le tube guide. Ce manchon est lui-même soudé ou brasé d'une part à la pièce d'extrémité supérieure et, d'autre part, à la grille supérieure, assurant ainsi la liaison mécanique de la pièce d'extrémité avec l'ensemble de la structure.

Ces dispositions engendrent toutefois un certain nombre d'inconvénients sérieux notamment en ce qui concerne les possibilités de démontage à distance de la pièce d'extrémité supérieure, par exemple en piscine pour le remplacement d'un crayon combustible défectueux.

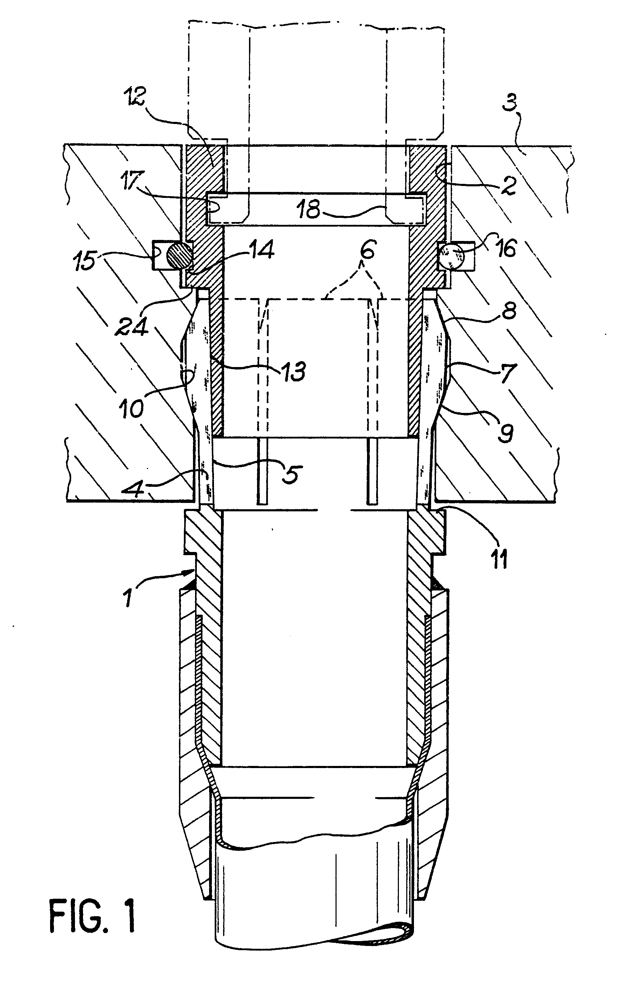

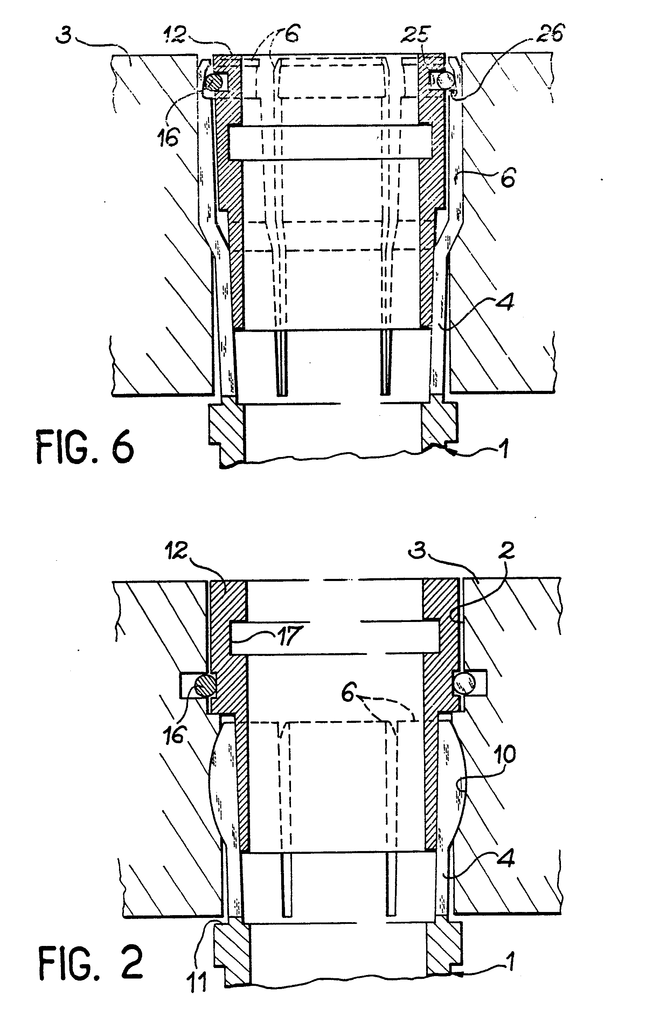

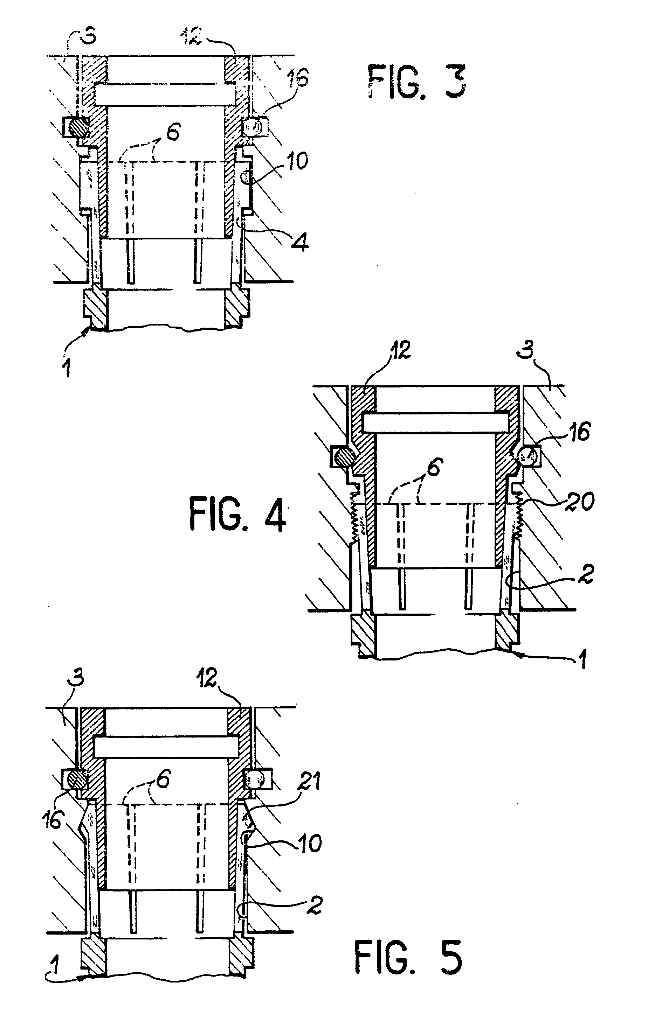

Pour rendre démontables les liaisons d'embout de tube guide sur la pièce d'extrémité supérieure d'un assemblage combustible, on a eu recours à différentes solutions équipées de systèmes de vissage. Une réalisation intéressante de l'art antérieur dans ce domaine est décrite dans le FR-A-2 493 024. Dans ce brevet on montre un dispositif de fixation (liaison) démontable d'un tube guide 22 dans un logement 25-27 prévu à cet effet dans la pièce (plaque) d'extrémité 19 d'un assemblage combustible de réacteur nucléaire, notamment du type refroidi à l'eau ordinaire (eau légère), le tube guide pouvant présenter un embout (page 6, lignes 17-21) dont l'extrémité en forme de virole présente un profil intérieur cylindrique fendu sur toute sa hauteur en un certain nombre de secteurs souples pouvant s'appliquer dans un logement annulaire ou sur un alésage sous la pression d'une bague cylindrique interne de blocage 28 ; des moyens (de serrage) sont prévus en outre pour bloquer et pour freiner (voir figures 1 et 2 et description de la page 4 ligne 36 à la page 5 ligne 5 et figures 3 et 4 et description de la page 5 ligne 34 à la page 6 ligne 11) pour serrer ou bloquer et freiner la bague de blocage en translation axiale par rapport à la pièce (plaque) d'extrémité 19, et pour assurer, à distance le démontage de la bague (moyen de serrage 28).

Dans cette réalisation toutefois, la partie supérieure de l'embout du tube guide 9 est fixée dans la plaque d'extrémité 19 par le moyen de serrage 28 qui est un écrou vissé. Ce mode de fixation n'autorise aucune souplesse axiale du tube guide et conduit à un démontage délicat sinon impossible, surtout lorsque celui-ci doit intervenir à distance sous plusieurs mètres d'eau au fond d'une piscine de protection.

Si donc, en théorie, de tels systèmes permettent de réaliser effectivement des liaisons démontables, il n'en est pas moins vrai en pratique, que les exigences de la technique rendent très difficiles l'élaboration de solutions non critiquables. En effet, un certain nombre de critères, dont on rappellera les principaux ci-après, rendent la réalisation et la mise en œuvre de fixations démontables de ce genre particulièrement délicates. En effet, pour être acceptable, il est souhaitable qu'une telle liaison permette de :

— de ne pas entraîner de torsions axiales du tube guide pendant son vissage ou son dévissage ;

— ne pas nécessiter de positionnement angulaire préalable des pièces à assembler ;

— ne pas comporter de risque de grippage des filets, en particulier lors du démontage après une période d'irradiation ;

— présenter un freinage de sécurité du système afin d'éviter tout desserrage accidentel ;

— assurer un démontage facile à distance compte-tenu des conditions opératoires en piscine de stockage ;

— permettre des conditions de réintroduction faciles de la plaque d'extrémité supérieure sur les embouts de tubes guides libres.

La présente invention a précisément pour objet un dispositif de fixation démontable d'un tube guide dans un alésage de pièce d'extrémité d'assemblage combustible de réacteur nucléaire selon la revendication 1 et qui, tout en étant d'une conception très simple, permet de satisfaire les différentes conditions énumérées précédemment.

Comme on le voit, le dispositif de fixation objet de l'invention ne comporte aucun filetage et son fonctionnement repose essentiellement sur l'utilisation d'un effet de cône entre trois pièces en présence que sont respectivement l'embout du tube guide, une bague de blocage et la plaque d'extrémité supérieure de l'assemblage combustible.

Par ailleurs, sa mise en œuvre ne nécessite aucun positionnement angulaire des pièces avant leur jonction, ni aucune rotation de celles-ci qui sont toutes de révolution et peuvent s'accoupler dans n'importe quelle position angulaire respective. Selon l'invention, le logement annulaire prévu sur la périphérie de chaque alésage de la plaque d'extrémité supérieure pour permettre la fixation des secteurs souples constituant l'embout du tube guide peut revêtir différentes formes équivalentes quant au résultat technique recherché.

A titre d'exemple, dans une première réalisation du dispositif objet de l'invention, ce logement annulaire correspond, en creux, à un épaulement cylindrique avec raccordements coniques, prévu en relief sur la périphérie externe de chacun des secteurs souples.

Dans une autre variante de mise en œuvre, ce logement est une chambre annulaire sphérique correspondant à un segment sphérique constituant la surface externe des secteurs souples.

Dans un autre mode de mise en œuvre, ce logement est une chambre cylindrique annulaire de profil rectangulaire ou biconique correspondant à celui des surfaces externes des extrémités des secteurs souples.

De la même façon, les moyens prévus pour freiner la bague de blocage en translation axiale par rapport à la pièce d'extrémité de l'assemblage peut revêtir notamment trois formes différentes.

Dans une première réalisation, ces moyens comportent essentiellement deux gorges cylindriques annulaires de section parallélépipédique creusées en regard respectivement dans la pièce d'extrémité et dans la bague de blocage et un jonc torique élastique apte à se loger dans l'espace constitué par les deux gorges.

Dans un deuxième mode de réalisation, ce même moyen comporte essentiellement une gorge cylindrique annulaire creusée dans la face externe de la bague de blocage, une rampe anti-retrait prévue en regard dans les secteurs souples de l'embout et un jonc torique élastique apte à se loger dans l'espace annulaire ainsi constitué entre ladite gorge et ladite rampe.

Dans une troisième réalisation, les moyens pour fixer la bague de blocage en translation axiale consistent en un certain nombre de points de sertissage de ladite bague dans la pièce d'extrémité, constitués par des « crevés » sur la paroi de la bague introduits dans une gorge annulaire creusée en regard dans la paroi de l'alésage de ladite pièce d'extrémité.

Selon l'invention, les moyens prévus pour assurer le démontage de la bague de blocage à distance consistent en une gorge cylindrique annulaire creusée dans la paroi interne de la bague et apte à recevoir un dispositif à tenons introduit depuis l'extérieur.

Enfin, selon une caractéristique secondaire de la présente invention, l'embout de chaque tube guide est muni d'un épaulement qui lui sert de butée pour faciliter sa mise en place en translation axiale vis-à-vis de la pièce d'extrémité de l'assemblage combustible.

De toute façon, l'invention sera mieux comprise en se référant à la description qui suit de plusieurs exemples de mise en œuvre qui seront décrits à titre explicatif et non limitatif en se référant aux figures 1 à 7 ci-jointes sur lesquelles :

la figure 1   représente en coupe un premier exemple de réalisation du dispositif de fixation démontable objet de l'invention ;

la figure 2   représente une première variante du mode de réalisation de la figure 1 ;

la figure 3   représente une deuxième variante de ce même mode de réalisation ;

la figure 4   représente une troisième variante de ce mode de réalisation ;

la figure 5   représente une quatrième variante de ce même mode de réalisation ;

la figure 6   représente une variante de réalisation de l'invention dans laquelle le freinage axial de la bague de blocage par le jonc torique se fait directement sur les secteurs souples de l'embout du tube guide ;

la figure 7   montre une réalisation possible des moyens de freinage de la bague de blocage en translation axiale par rapport à la pièce d'extrémité.

Sur la figure 1, on a représenté l'embout 1 d'un tube guide d'assemblage combustible de réacteur nucléaire du type refroidi à l'eau ordinaire pressurisée, dont le dispositif objet de l'invention fixation dans un alésage 2 de la pièce d'extrémité supérieure 3 de ce même assemblage.

Selon l'invention, la partie supérieure 4 de l'embout 1 se présente sous la forme d'une virole dont le profil intérieur 5 est usiné en forme de cylindre ; par ailleurs, cette extrémité de l'embout 4 en forme de virole est fendu sur toute sa hauteur en un certain nombre de secteurs souples 6, au nombre par exemple de 6. Chacun de ces secteurs souples 6 a un profil extérieur qui comporte au centre un épaulement cylindrique 7 raccordé à deux parties coniques 8 et 9, l'ensemble pouvant s'appliquer dans un logement annulaire 10 de même profil usiné dans la pièce d'extrémité 3 de façon à définir une hauteur de pénétration axiale du tube guide 1 dans la plaque 3. A cet effet d'ailleurs, un épaulement 11 sert de butée de sécurité pour la mise en place de l'embout 1 et il n'est normalement pas en contact avec la pièce d'extrémité 3.

Selon l'invention, une bague cylindrique interne 12 de blocage, munie d'une fourrure conique 13 destinée à s'introduire dans l'alésage 5, permet le blocage des secteurs souples 6 dans le logement annulaire 10.

Pour compléter le dispositif de fixation, des moyens sont prévus pour freiner la bague de blocage 12 en translation axiale par rapport à la pièce d'extrémité 3 et se composent essentiellement de deux gorges cylindriques 14 et 15 creusées en regard respectivement dans la bague de blocage 12 et dans l'alésage de la pièce d'extrémité 3 définissant ainsi un espace dans lequel vient se loger un jonc torique élastique 16 qui par simple entraînement assure la position axiale de la bague de blocage 12.

Enfin, sur la périphérie interne de la bague 12 se trouve taillée une gorge cylindrique annulaire 17 apte à recevoir un dispositif à tenons 18 introduit depuis l'extérieur de la pièce d'extrémité 3 et qui sert au démontage à distance de la bague de blocage 12 et de l'ensemble du dispositif de fixation.

Dans la variante de réalisation de la figure 2, on retrouve portant les mêmes nombres de référence que sur la figure 1, la plupart des éléments caractéristiques du dispositif de fixation démontable précédemment décrit ; dans cet exemple toutefois, le logement 10 prévu pour les différents secteurs souples 6, dans la paroi de la pièce d'extrémité 3, est une chambre annulaire sphérique creuse correspondant à un segment sphérique de même profil sur la surface externe desdits secteurs 6 de l'embout 4. Le fonctionnement du dispositif de la figure 2 est strictement le même que celui de la figure 1.

Sur la figure 3, le mode de réalisation représenté est une variante dans laquelle ce même logement 10 est constitué d'une chambre annulaire creuse à profil cylindrique rectangulaire dans la pièce d'extrémité 3 qui correspond à un épaulement en relief de même section sur l'extrémité 4 de l'embout 1. Dans ce mode de mise en œuvre, un certain jeu axial peut exister par conséquent entre l'extrémité 4 de l'embout 1 et la plaque d'extrémité 3 qui compense les différences de hauteur des tubes guides.

Dans un autre mode de réalisation représenté sur la figure 4, on retrouve encore tous les éléments essentiels constitutifs de l'invention portant les mêmes nombres de référence que sur les figures 1 à 3. Dans cette réalisation toutefois, le mode de définition de la position axiale du tube guide 1 par rapport à la pièce d'extrémité 3 est constitué par un certain nombre de filets circulaires d'accrochage 20 en relief sur l'extrémité de l'embout 4 et en creux sur la paroi interne de la pièce d'extrémité 3.

Lorsque les filets correspondants sont accrochés, l'embout du tube guide 1 est situé en position axiale fixe par rapport à la pièce d'extrémité 3, quel que soit l'enfoncement de la bague 12.

La figure 5 représente une autre variante de réalisation du dispositif de fixation objet de l'invention, dans laquelle la définition de la position axiale de l'extrémité de l'embout 1 dans l'alésage 2 est réalisée par un épaulement 21 de profil biconique situé à la périphérie externe de l'extrémité des secteurs souples 6, cet épaulement venant se loger dans une gorge 10 de même profil usinée en regard dans la pièce d'extrémité 3.

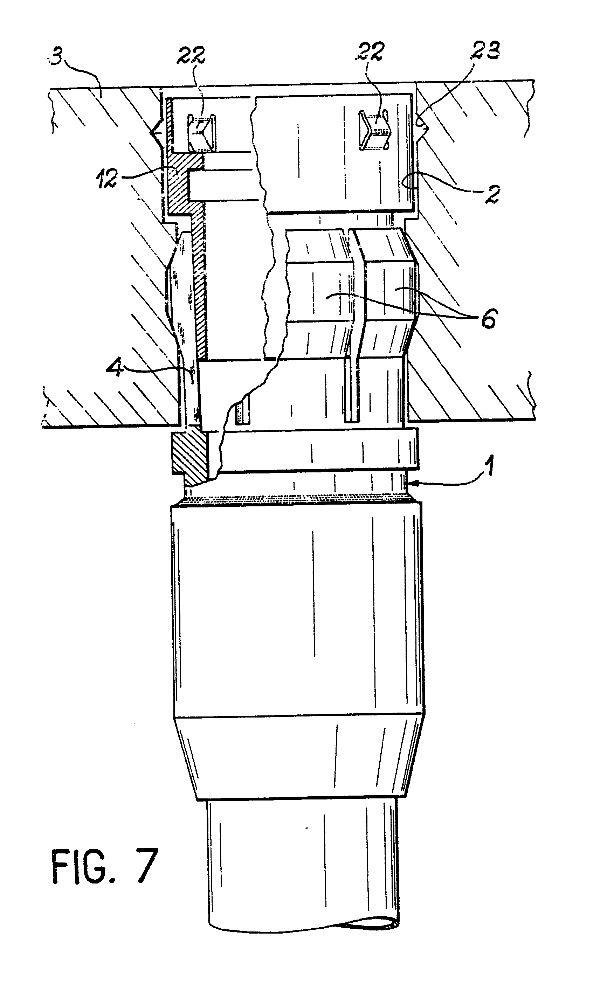

Sur la figure 6, on a représenté une variante de réalisation dans laquelle les moyens pour freiner la bague de blocage 12 en translation axiale sont différents de ce qu'ils sont dans les autres modes de réalisation. Dans la réalisation de la figure 6 en effet, ces moyens comportent une gorge cylindrique 25 creusée dans la face externe de la bague de blocage 12 et une rampe anti-retrait 26 creusée en regard de la gorge précédente dans les secteurs souples 6 de l'embout 4 du tube guide 1. Dans l'espace annulaire ainsi constitué entre la gorge 25 et la rampe 26 un jonc torique élastique 16 permet d'assurer le freinage direct de la bague de blocage 12 sur les secteurs souples 6 de l'embout en forme de virole. Cette variante de réalisation permet notamment de dissocier le freinage de la bague de blocage 12 d'un déplacement axial éventuel entre l'embout 4 et la pièce d'extrémité 3.

Sur la figure 7, on a représenté enfin, un autre mode de réalisation possible du dispositif de freinage de la bague de blocage 12 en translation axiale. Dans cet exemple cette fixation est obtenue à l'aide d'un certain nombre de points de sertissage de ladite bague 12 dans la pièce d'extrémité 3 constitués par des crevés souples tels que 22 de la paroi interne de la bague 12 qui viennent pénétrer dans une gorge annulaire 23 de section correspondante placée en regard dans la paroi 2 de l'alésage de ladite pièce d'extrémité 3. Les autres dispositions du mode de réalisation de la figure 7 sont identiques à ceux de la figure 1 et ne feront par conséquent pas l'objet d'une description complémentaire.

Pour tous les modes de réalisation qui ont été décrits sur les figures précédentes, le fonctionnement du dispositif de fixation démontable objet de l'invention se ramène dans ses grandes lignes aux étapes suivantes :

L'embout 4 du tube guide 1 est introduit dans la pièce d'extrémité 3 dans une position azimutale qui peut être quelconque, en utilisant la flexibilité des secteurs souples fendus 6 composant l'embout en forme de virole du tube guide 1 ;

l'extrémité de l'embout 4 se place alors à l'aide de l'un des moyens décrits sur les figures dans le logement annulaire, prévu à cet effet sur la périphérie de chaque alésage, de profil correspondant à celui de l'extrémité de l'embout. L'épaulement 11 sert si besoin est de butée de contrôle de position ;

la bague interne de blocage 12 est alors introduite jusqu'à l'obtention du contact sur l'épaulement 24, position qui correspond alors à l'encliquetage du jonc 16 dans les gorges 14 et 15 et assure la fonction anti-retrait de la bague 12 ainsi freinée en translation. La faible conicité donnée à l'extrémité ou fourrure 13 de la bague 12 ainsi qu'aux différents profils 5 des pièces 6 assure cette pénétration de la bague 12 en lui permettant d'appuyer les extrémités de l'embout 4 dans le logement annulaire 10 prévu à cet effet dans la pièce d'extrémité 3. A ce moment le serrage des différents secteurs 6 de l'embout 4 dans la pièce d'extrémité est réalisé.

Si besoin est, une correction légère de mise en place de l'embout 4 dans le logement annulaire 10 de la pièce d'extrémité 3 peut se réaliser automatiquement sous l'effet de la pression radiale exercée par la fourrure conique ou extrémité 13 de la bague de blocage 12 et la réaction des parties coniques de cette fourrure 13 et des secteurs souples 6 en contact. On peut enfin remarquer le caractère auto-serrant des dispositifs de fixation objets de l'invention puisque, lors de sollicitations axiales sur l'embout 1, qu'elles soient de traction ou de compression d'ailleurs, la composante radiale qui se développe au contact des surfaces coniques 5 et 13 renforce le serrage de la fourrure conique 13 de la bague de blocage 12.

**Revendications**

1. Dispositif de fixation démontable d'un tube guide (1) dans un alésage (2) prévu à cet effet dans la pièce d'extrémité (3) d'un assemblage combustible de réacteur nucléaire, notamment du type refroidi à l'eau ordinaire, le tube guide comportant un embout (1) dont l'extrémité (4) en forme de virole présente un profil intérieur cylindrique et est fendue sur toute sa hauteur en un certain nombre de secteurs souples (6) pouvant s'appliquer dans un logement annulaire (10) prévu dans la paroi de l'alésage (2), caractérisé en ce que l'application des secteurs souples (6) dans le logement annulaire (10) est assurée par la pression d'une bague interne de blocage (12), coaxiale à l'alésage (2) et emboîtée par un blocage conique (13) sur le profil intérieur des secteurs souples (6), des moyens (14, 15, 16 ; 25, 26, 16 ;

22, 23) étant prévus, en outre, pour freiner la bague de blocage en translation axiale par rapport à la pièce d'extrémité (3), et pour permettre à distance, le démontage de la bague (12).

2. Dispositif de fixation démontable selon la revendication 1, caractérisé en ce que le logement annulaire (10) prévu dans la pièce d'extrémité (3) correspond, en creux, à un épaulement cylindrique (7) avec raccordements coniques (8, 9) prévu en relief sur la périphérie externe de chacun des secteurs souples (6) (fig. 1).

3. Dispositif de fixation démontable selon la revendication 1, caractérisé en ce que le logement (10) prévu pour les secteurs souples (6) dans la pièce d'extrémité (3) est une chambre annulaire creuse correspondant au profil du segment sphérique sur la surface externe desdits secteurs (6) (fig. 2).

4. Dispositif de fixation démontable selon la revendication 1, caractérisé en ce que le logement (10) prévu pour les secteurs souples (6) dans la pièce d'extrémité (3) est une chambre cylindrique annulaire de profil correspondant à celui des surfaces externes des extrémités des secteurs souples (fig. 3).

5. Dispositif de fixation démontable selon la revendication 1, caractérisé en ce que le logement (10) prévu pour les secteurs souples (6) dans la pièce d'extrémité (3) est une chambre annulaire de section biconique de profil correspondant à celui des surfaces externes des extrémités des secteurs souples.

6. Dispositif de fixation démontable selon la revendication 1, caractérisé en ce que l'alésage présente des filets d'accrochage circulaires correspondant à des filets d'accrochage disposés sur les surfaces externes des extrémités des secteurs souples (6) (fig. 4).

7. Dispositif de fixation démontable selon l'une quelconque des revendications 1 à 6 précédentes, caractérisé en ce que les moyens pour freiner la bague de blocage (12) en translation axiale comportent deux gorges cylindriques (14, 15) annulaires placées en regard respectivement dans la pièce d'extrémité (3) et dans la bague de blocage et un jonc torique élastique (16) apte à se loger dans l'espace constitué par les deux gorges (14, 15) (fig. 1, 2, 3, 4, 5).

8. Dispositif de fixation démontable selon l'une quelconque des revendications 1 à 6, caractérisé en ce que les moyens pour fixer la bague de blocage (12) en translation axiale comportent une gorge cylindrique annulaire (25) creusée dans la face externe de la bague de blocage, une rampe anti-retrait (26) prévue en regard dans les secteurs souples (6) de l'embout (4) et un jonc torique élastique (16) apte à se loger dans l'espace annulaire ainsi constitué entre ladite gorge et ladite rampe (fig. 6).

9. Dispositif de fixation démontable selon l'une quelconque des revendications 1 à 6 précédentes, caractérisé en ce que les moyens pour freiner la bague de blocage (12) en translation axiale consistent en un certain nombre de points de sertissage de ladite bague dans la pièce d'extrémité, constitués par des « crevés » (22) de la paroi de la bague (12) coopérant avec une gorge annulaire (23) placée en regard dans la paroi de l'alésage (2) de ladite pièce d'extrémité (fig. 7).

10. Dispositif de fixation démontable selon l'une quelconque des revendications 1 à 9, caractérisé en ce que les moyens pour assurer le démontage de la bague de blocage à distance consistent en une gorge cylindrique annulaire (17) creusée dans la paroi interne de la bague (12) et apte à recevoir un dispositif à tenons (18) introduit depuis l'extérieur.

11. Dispositif de fixation démontable selon l'une quelconque des revendications 1 à 10, caractérisé en ce que l'embout du tube guide est muni, à sa base, d'un épaulement annulaire (11) servant de butée pour sa mise en place en translation axiale dans la pièce d'extrémité (3) de l'assemblage.

## Claims

1. Demountable fastening device for a guide tube (1) in a bore (2) provided for this purpose in the end component (3) of a nuclear reactor fuel assembly, particularly of the type cooled with ordinary water, the guide tube comprising an end part (1) whose shell-shaped extremity (4) has a cylindrical internal outline and is split over its entire height into a number of flexible segments (6) capable of being applied into an annular housing (10) provided in the wall of the bore (2), characterized in that the application of the flexible segments (6) into the annular housing (10) is ensured by the pressure of an internal locking ring (12), coaxial with the bore (2) and encased by a conical locking (13) onto the internal outline of the flexible segments (6), means (14, 15, 16 ; 25, 26, 16 ; 22, 23) being additionally provided for braking the locking ring in axial translation relative to the end component (3), and for permitting the ring (12) to be removed, from a distance.

2. Demountable fastening device according to claim 1, characterized in that the annular housing (10) provided in the end component (3) corresponds, as a cavity, to a cylindrical shoulder (7) with conical connections (8, 9) provided in relief on the outer periphery of each of the flexible segments (6) (fig. 1).

3. Demountable fastening device according to claim 1, characterized in that the housing (10) provided for the flexible segments (6) in the end component (3) is a hollow annular chamber corresponding to the outline of the spherical portion on the outer surface of the said segments (6) (fig. 2).

4. Demountable fastening device according to claim 1, characterized in that the housing (10) provided for the flexible segments (6) in the end component (3) is an annular cylindrical chamber with an outline corresponding to that of the outer surfaces of the ends of the flexible segments (fig. 3).

5. Demountable fastening device according to claim 1, characterized in that the housing (10) provided for the flexible segments (6) in the end component (3) is an annular chamber of biconical cross-section with an outline corresponding to that of the outer surfaces of the ends of the flexible segments.

6. Demountable fastening device according to claim 1, characterized in that the bore has circular anchoring threads corresponding to anchoring threads arranged on the outer surfaces of the ends of the flexible segments (6) (fig. 4).

7. Demountable fastening device according to any one of the preceding claims 1 to 6, characterized in that the means for braking the locking ring (12) in axial translation comprise two annular cylindrical grooves (14, 15) placed facing each other in the end component (3) and in the locking ring, respectively, and a resilient toric rod (16) capable of being housed in the space formed by the two grooves (14, 15) (fig. 1, 2, 4, 5).

8. Demountable fastening device according to any one of claims 1 to 6, characterized in that the means for fastening the locking ring (12) in axial translation comprise an annular cylindrical groove (25) excavated in the outer face of the locking ring, a facing anti-withdrawal lip (26) provided in the flexible segments (6) of the end part (4) and a resilient toroid rod (16) capable of being housed in the annular space thus formed between the said groove and the said lip (fig. 6).

9. Demountable fastening device according to any one of the preceding claims 1 to 6, characterized in that the means for braking the locking ring (12) in axial translation consist of a number of points for crimping the said ring into the end component, which consist of « punctures » (22) in the wall of the ring (12) interacting with an annular groove (23) placed opposite in the wall of the bore (2) of the said end component (fig. 7).

10. Demountable assembly device according to any one of claims 1 to 9, characterized in that the means for ensuring the demounting of the locking ring from a distance consist of an annular cylindrical groove (17) excavated in the inner wall of the ring (12) and capable of receiving a device having tenons (18), introduced from the outside.

11. Demountable fastening device according to any one of claims 1 to 10, characterized in that the end part of the guide tube is equipped, at its base, with an annular shoulder (11) serving as an end-stop for its installation in axial translation into the end component (3) of the assembly.

## Patentansprüche

1. Demontierbare Befestigungsvorrichtung eines Führungsrohres (1) in einer Bohrung (2), die dazu in dem Endstück (3) einer Brennstoffanordnung eines Kernreaktors vorgesehen ist, insbesondere eines mit gewöhnlichem Wasser gekühlten Kernreaktors, wobei das Führungsrohr einen Ansatz (1) aufweist, dessen ringförmiges Ende (4) ein zylindrisches Innenprofil besitzt und über seine gesamte Höhe in eine Anzahl von flexiblen Sektoren (6) geschlitzt ist, die sich in einem in der Wand der Bohrung (2) vorgesehenen ringförmigen Sitz (10) anlegen können, dadurch gekennzeichnet, daß das Anlegen der flexiblen Sektoren (6) in dem ringförmigen Sitz (10) durch den Druck einer inneren Sperrhülse (12) gesichert wird, die koaxial zur Bohrung (2) ist und mit einer konischen Verriegelung (13) in das Innenprofil der flexiblen Sektoren (6) eingesetzt ist, wobei weiterhin eine Einrichtung (14, 15, 16 ; 25, 26, 16 ; 22, 23) vorgesehen ist, um eine axiale Verschiebung der Sperrhülse bezüglich des Endstückes (3) zu hemmen und das Demontieren der Hülse (12) aus der Ferne zu erlauben.

2. Demontierbare Befestigungsvorrichtung nach Anspruch 1, dadurch gekennzeichnet, daß der in dem Endstück (3) vorgesehene ringförmige Sitz (10) mit seiner Vertiefung einer zylindrischen Schulter (7) mit konischen Anschlußflächen (8, 9) entspricht, die am Außenumfang von jedem der flexiblen Sektoren (6) vorsteht (Figur 1).

3. Demontierbare Befestigungsvorrichtung nach Anspruch 1, dadurch gekennzeichnet, daß der für die flexiblen Sektoren (6) in dem Endstück (3) vorgesehene Sitz (10) eine hohle Ringkammer ist, die dem sphärischen Profil auf der Außenfläche der Sektoren (6) entspricht (Figur 2).

4. Demontierbare Befestigungsvorrichtung nach Anspruch 1, dadurch gekennzeichnet, daß der für die flexiblen Sektoren (6) in dem Endstück (3) vorgesehene Sitz (10) eine zylinderförmige Ringkammer ist, deren Profil dem der Außenflächen der Enden der flexiblen Sektoren entspricht (Figur 3).

5. Demontierbare Befestigungsvorrichtung nach Anspruch 1, dadurch gekennzeichnet, daß der für die flexiblen Sektoren (6) in dem Endstück (3) vorgesehene Sitz (10) eine Ringkammer mit bikonischem Profil ist, das dem der Außenflächen der Enden der flexiblen Sektoren entspricht.

6. Demontierbare Befestigungsvorrichtung nach Anspruch 1, dadurch gekennzeichnet, daß die Bohrung ringförmige Einhakwindungen besitzt, die Einhakwindungen entsprechen, die auf den Außenflächen der Enden der flexiblen Sektoren (6) angeordnet sind (Figur 4).

7. Demontierbare Befestigungsvorrichtung nach einem der vorangehenden Ansprüche 1 bis 6, dadurch gekennzeichnet, daß die Einrichtung zum Hemmen einer axialen Verschiebung der Sperrhülse (12) zwei zylindrische Ringnuten (14, 15) aufweist, die einander gegenüberliegend jeweils in dem Endstück (3) und in der Sperrhülse vorgesehen sind, und einen elastischen Sprengring (16) aufweisen, der geeignet ist, in den von den beiden Nuten (14, 15) gebildeten Raum aufgenommen zu werden (Figuren 1, 2, 3, 4, 5).

8. Demontierbare Befestigungsvorrichtung nach einem der Ansprüche 1 bis 6, dadurch gekennzeichnet, daß die Einrichtung zum Festlegen der Sperrhülse (12) gegen eine axiale Verschiebung eine hohlzylindrische Ringnut (25) in der Außenfläche der Sperrhülse, eine vorspringende Schrägfläche (26), die gegenüberliegend in den flexiblen Sektoren (6) des Ansatzes (4) ausgebildet ist, und einen elastischen torusförmigen Sprengring (16) aufweisen, der geeignet ist, in dem ringförmigen Raum, der auf diese Weise zwischen der Nut und der Schrägfläche gebildet ist, aufgenommen zu werden (Figur 6).

9. Demontierbare Befestigungsvorrichtung nach einem der vorangehenden Ansprüche 1 bis 6, dadurch gekennzeichnet, daß die Einrichtung zum Hemmen einer Axialverschiebung der Sperrhülse (12) eine Anzahl von Einkerbungspunkten der Sperrhülse in dem Endstück aufweist, die durch « Aufbrechungen » (22) der Wand der Sperrhülse (12) gebildet werden und mit einer Ringnut (23) zusammenarbeiten, die gegenüberliegend in der Wand der Bohrung (2) des Endstückes angeordnet sind (Figur 7).

10. Demontierbare Befestigungsvorrichtung nach einem der Ansprüche 1 bis 9, dadurch gekennzeichnet, daß die Einrichtung zum Sicherstellen der Demontierung der Sperrhülse aus der Ferne eine zylindrische ringförmige Hohlnut (17) in der Innenwand der Hülse (12) umfaßt, in die eine Zapfenvorrichtung (18) aufgenommen werden kann, die von außen eingeführt wird.

11. Demontierbare Befestigungsvorrichtung nach einem der Ansprüche 1 bis 10, dadurch gekennzeichnet, daß der Ansatz des Führungsrohres an seiner Basis mit einer ringförmigen Schulter (11) versehen ist, die als Anschlag für sein Einsetzen bei axialer Verschiebung in das Endstück (3) der Anordnung dient.

FIG. 1

FIG. 6

FIG. 2

FIG. 3

FIG. 4

FIG. 5

FIG. 7

4